# EUROPEAN PATENT SPECIFICATION

(11) **EP 0 961 749 B1**
(45) Date of publication and mention of the grant of the patent: **08.08.2001**
(21) Application number: 98907007.3
(22) Date of filing: 20.02.1998
(51) Int. Cl.: B66B 9/08, G01C 9/00

(54) **STAIR LIFT**
TREPPENAUFZUG
APPAREIL POUR MONTER LES ESCALIERS

(30) Priority: 20.02.1997 GB 9703570
(43) Date of publication of application: 08.12.1999
(73) Proprietor: D.C. Drives Ltd., Swanage, Dorset BH19 2PQ (GB); BISON BEDE LIMITED, County Durham DH8 8JB (GB)
(72) Inventor: JONES, Peter, John, Dorset BH19 2RH (GB); WILLIAMS, Philip, Elphee, Dorset BH19 2SB (GB)
(74) Representative: Crawford, Andrew Birkby
(86) International application number: GB9800541
(87) International publication number: WO9837007

(56) References cited:
- GB-A- 2 195 775
- GB-A- 2 301 811
- US-A- 4 814 753

## Description

The present invention relates to moveable devices which have to be maintained in a predetermined orientation as they move and more particularly to arrangements for maintaining a stair lift seat arrangement in a substantially horizontal orientation.

Stair lifts, for transporting people who have difficulty negotiating staircases from one floor to another, have been used for several years in buildings where such people reside. These stair lifts generally comprise a rail arrangement which runs along a staircase in a similar manner to a bannister. They further comprise a chassis which runs along the rails which in turn supports a load bearing means generally comprising a seat. When the stair lift is in operation and the chassis and seat arrangement are running along the rails, it is very important that the seat arrangement moves as smoothly as possible, and that it is kept in a horizontal orientation. This ensures that the person being transported, who will frequently be frail and sensitive to sudden movements, is not injured.

In many residential buildings, the stair lift will travel along a substantially straight inclined rail, or a curved rail of variable gradient from one level to another. No seat orientation mechanism will hence be necessary as the chassis can be fixed in a predetermined orientation to the seat means. However. it is also common for staircases to comprise two or more flights, often of different gradients and frequently with horizontal rail sections as comers are turned and level floor sections are negotiated. When stair lifts are required to negotiate rails which vary in gradient, some mechanism is required for rotating the seat means relative to the chassis so that the seat means always remains horizontal as the chassis means rotates about a vertical axis when the rail gradient varies. Usually this is done mechanically using push or pull rods.

As an alternative to the mechanical approach, there have been proposals to use electronic levelling and two fundamentally different approaches to achieving levelling electronically have been proposed. The first approach is to memorise the gradient of the rail along its length. By monitoring the position of the stair lift on the rail, the gradient at that point can be calculated and the seat means angled accordingly. This method has the problem that a programmable memory device is required, and that programming the device is a labourious process. Furthermore, the stair lift has to be synchronised with the rail throughout its length at all times which again increases the complexity of the stair lift mechanism if there is not to be a loss of synchronisation.

The alternative to this approach is to constantly monitor the inclination of the chassis arrangement or the seat arrangement and use this information to update the angle of the seat means relative to the chassis accordingly. A pendulum assembly attached to the seat means or chassis could be considered as being suitable since a change in inclination of the chassis results in a displacement of the pendulum. This displacement of the pendulum could be monitored either electrically or mechanically, and according to the monitored displacement, the inclination of the seat means changed to maintain the seat means in a horizontal orientation.

For the seat to remain in a horizontal orientation the levelling system must respond fast enough to counteract the tendency for the seat to follow the changes in gradient to be encountered at normal stairlift operating speed. These angular changes occur in a range of up to 30deg/sec.

A problem arises with the use of pendulums for this purpose; the angle of a pendulum relative to the frame to which it is attached at its fulcrum is affected not only by the attitude of the frame but also the acceleration of the frame. Thus, as the chassis accelerates from rest or turns a comer, inertia of the pendulum mass will cause the pendulum to swing regardless of the attitude of the frame setting up an oscillation of the pendulum. If the resonant frequency of the pendulum is in a range that the pendulum can respond to, and if the swinging of the pendulum is of the same order of magnitude as would occur due to changes of gradient, a significant undesirable signal can be generated which will cause swinging of the seat means in the same manner that the pendulum swings causing uncontrollable instability. This will usually be the case, as pendulums have to be of a size in the order of centimetres on stair lifts. This leads to resonance frequency of the order of a few hertz, giving angular accelerations of very similar magnitudes to those generated by the change in gradient of the rail. To create a pendulum with resonant frequency greater than approximately 30 Hz might be possible, but would be prohibitively expensive and possibly unproducable.

Furthermore, if the pendulum is attached to the seat arrangement, the feedback from the swinging pendulum might actually cause the seat arrangement to swing in time with the pendulum, causing an ever increasing amplitude of the swing. Controlling the response time to avoid this positive feedback in all situations is not trivial.

The present invention provides apparatus comprising first and second assemblies connecting together for relative movement about an axis of rotation, means for causing relative movement between the assemblies and control means for controlling the movement means, characterised in that the control means includes an inclinometer attached to the first assembly, the inclinometer comprising an inertial mass attached to a stiff arm provided with a strain gauge, wherein the centre of mass of the inertial mass is substantially located at the axis of rotation of the first assembly relative to the second assembly.

Using a stiff, bendable, arm of material rigidly attached to, and not rotatable about a pivot point instead of a free swinging pendulum, and a strain gauge to monitor the strain on the arm, an inclinometer is generated which has a very high resonant frequency and quick resonance decay time. The problem of using a swinging pendulum to measure the inclination of the seat arrangement is significantly overcome. This inclinometer will be highly accurate as long as it remains in a substantially vertical orientation, as will be the case if it is attached to the seat arrangement. Further, the inclinometer is substantially unaffected by angular acceleration of the stair lift chassis during changes of gradient.

By positioning the mass at the centre of rotation of the seat arrangement about the chassis means, rotation of the seat arrangement about the chassis means does not introduce an inertial component to the acceleration of the mass, improving the feedback characteristics of the inclinometer.

An embodiment of the present invention is shown by way of example in the accompanying drawings in which
Figure 1 is a schematic front view of lift apparatus with a chair thereof shown positioned relative to an inclined guide rail, various internal components also being shown;
Figure 2 is a fragmentary schematic front view of the lift apparatus of Figure 1, but with a chassis of the apparatus on a horizontally disposed guide rail;
Figure 3 is a fragmentary, part cross-sectional side view of the lift apparatus to an enlarged scale;
Figure 4 shows an overview of the circuit of the first embodiment;
Figure 5 shows diagrammatically a second embodiment of the present invention; and
Figure 6 shows an overview of the circuit of the second embodiment. and

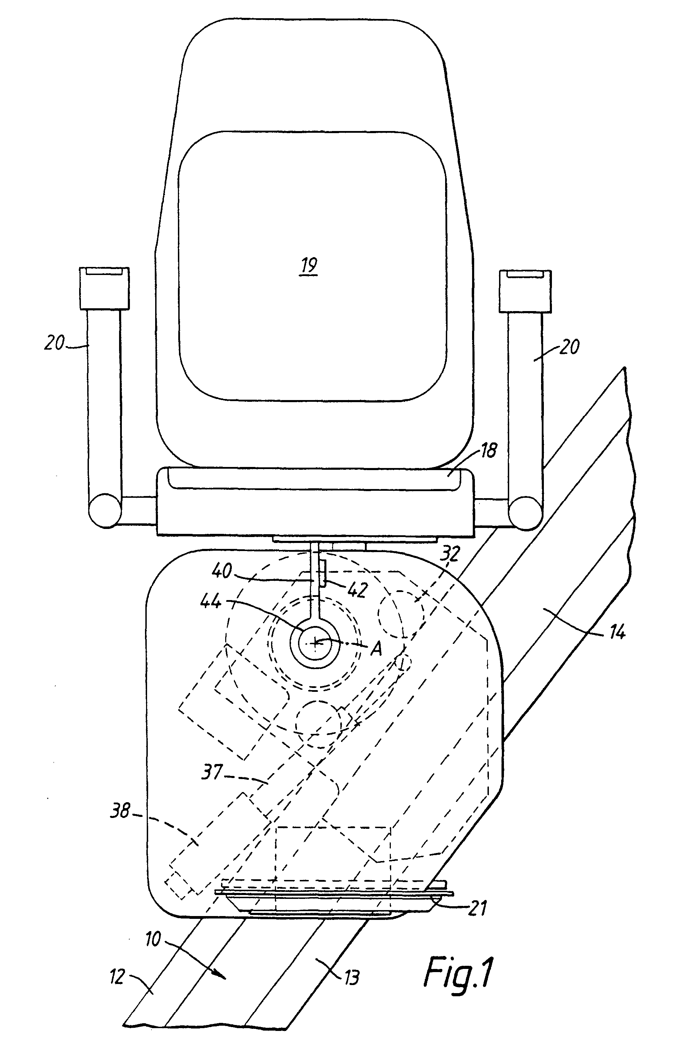

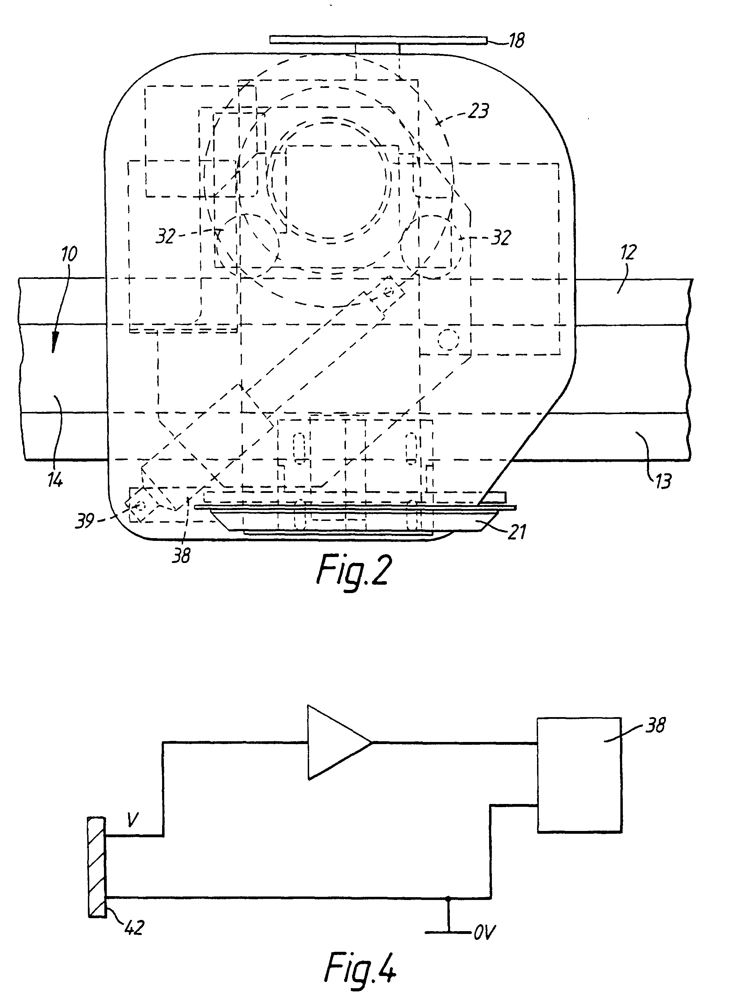

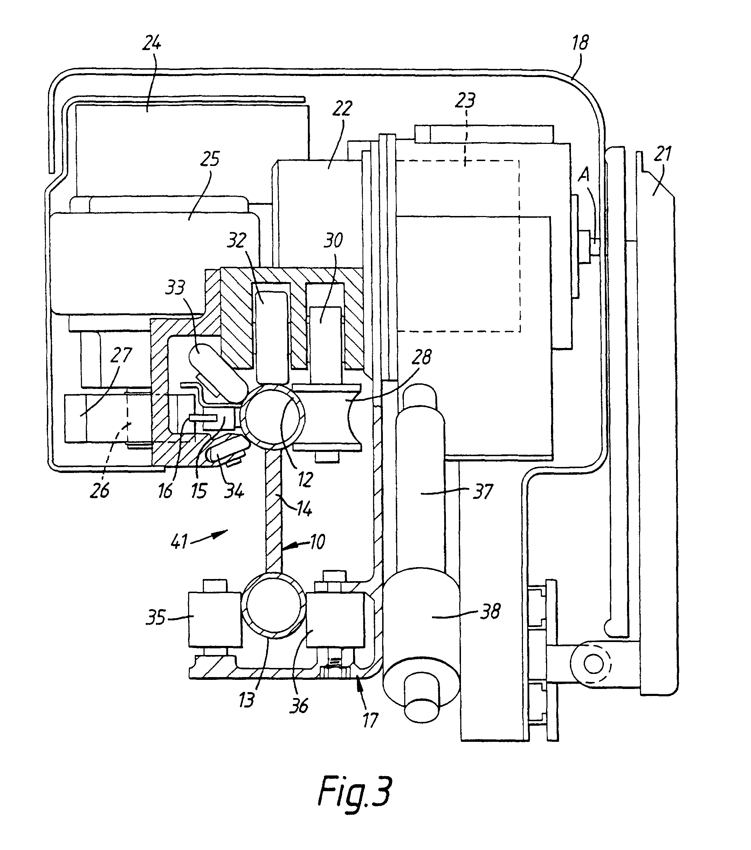

Figures 1 to 3 show a stairlift installation which is described in more detail in GB-A-2301811 comprising guide means in the form of a guide rail 10 extending, in use, substantially parallel to a staircase. In Figure 1 the guide rail 10 is shown inclined, whereas in Figure 2 the rail is shown horizontal as, for example, would be the case at a landing of the staircase. As shown best in Figure 3, the guide rail 10 is disposed, in use, in a vertical plane, the rail in this case being made up of a pair of upper and lower hollow, circular-section tubes 12, 13, respectively, connected together along the length of the rail by a multiplicity of generally equally spaced plates, each forming a central web 14. The rail is carried by a number of upright columns (not shown), the columns being connected to the rail at one side thereof, this being the left-hand side as viewed in Figure 3. The columns can be connected to respective webs 14 or otherwise attached. To the upper tube 12, at the left-hand side thereof (as viewed in Figure 3), is attached, for example by welding, a multiplicity of spaced connector pieces 15 each disposed to extend horizontally away from the tube. These connector pieces serve to mount a gear rack 16, shown in Figure 3 which has its teeth at the free end thereof remote from the tube 12.

The main part of the stairlift installation comprises a frame or chassis 17 which, as will be described, is arranged to be driven, in use, along the guide rail whilst in engagement therewith. Pivotally mounted on the chassis 17 in a vertical plane is load carrying means in the form of a chair, shown in Figure 1, having a seat 18, backrest 19, armrests 20 and a footrest 21 which is pivotally mounted at the bottom of the chair so that it can be folded up, when not in use, to the position shown in Figure 3. In use it will be appreciated that the footrest extends horizontally outwards as shown in Figures 1 and 2.

In the present embodiment the stairlift is self-propelled, in that accommodated in the chassis is an electric motor 22 powered by one or more batteries suitably arranged in the chassis. Batteries 23 and 24 are shown by way of example in Figure 3, and these may be rechargeable. An output shaft of the motor is taken to a gearbox 25 also accommodated within the chassis, and an output shaft 26 from the gearbox carries a toothed gear 27 which engages with the gear rack 16. Accordingly as the motor drives the gear 27 through the gearbox 25, rotation of the gear on the fixed rack causes the chassis to be driven along the rack and therefore along the rail.

As shown in Figures 1 to 3, a vertically depending part of the seat 18 is disposed across the front of the chassis and this part is pivotally mounted to the chassis at axis A in this embodiment is co-axial with the centre rotation of the motor 22, so that the relative angular position of the chair to the chassis can be freely adjusted, and as will be described, this adjustment ensures that the chair is always vertical or substantially vertical with the respective upper surfaces of the seat and footrest being horizontal or substantially so, thereby ensuring a smooth and safe passage for an occupant of the chair at all times, even when the rail inclination is changing.

The chassis is supported and guided on the rail 10 by a plurality of rollers in engagement with the upper and lower tubes. As shown in Figure 3, a guide roller 28 engages the upper tube 12 at the right-hand side thereof, as viewed in this Figure. The roller 28 is of barrel-shape, namely having a concave surface between its peripheral ends, this curvature being adapted to match the curvature of the upper tube 12 so that the guide roller 28 can smoothly engage and run along this upper tube 12 as the carriage is driven along the rail, in use, as described.

As can be seen from Figure 3, three idler rollers, 32, 33 and 34 respectively are pivotally carried by the chassis and engage the upper tube 12. The idler roller 32 engages the uppermost part of the tube 12, whilst the rollers 33 and 34 engage the left-hand side of the upper tube 12 at respective opposite sides of the gear rack 16. It will be appreciated that, in use, with there being an occupant in the seat 18, the weight distribution in respect of the stairlift is such as to transmit significant forces through these rollers 32 to 34. The lower tube 13 is engaged a respective opposite sides thereof by vertically pivoted idler rollers 35, 36 respectively carried by the chassis. These prevent the chassis swaying about the rail, and the length of these rollers can be such as to allow for variations in the depth of the guide rail 10, namely to accommodate a rail with a longer central web.

In order to maintain the seat in a generally vertical plane, so that the footrest, and also the upper surface of the seat are maintained in a horizontal plane, control means including sensing means are provided for monitoring the inclination of the chassis and/or the load carrying means, namely the chair, so that in response to the detection of any change in the inclination, adjustment is effected to move the load carrying means to the desired described vertical position. To effect movement between the chassis and the chair, there is provided a worm drive or screw 37 driven by an electric motor 38 shown in Figures 1 to 3. One end 39 of the screw 37 (Figure 2) is connected to a bracket at the bottom of the chair, whilst its other end is connected to a bracket on the chassis. Either or both of these connections can be pivotal. Accordingly retraction or extension of the screw causes angular movement of the whole of the chair about its pivot to the chassis in order to bring the chair into the required vertical position shown in Figure 1. This correction applies both for straight and also curved sections of the guide rail, whether inclined or horizontal, i.e. as when the lift negotiates vertical bends.

A stiff yet flexible and flat arm 40 either comprises or is provided with a piezoelectric strain gauge 42 which generates a voltage when the strain in the arm changes. Voltages V of different polarities are produced depending on the direction that the strain in the arm changes. In modifications of this embodiment two strain gauges are used which could be fixed to the arm in a configuration where the two sensors work independently or in tandem. The arm 40 is attached rigidly at one end to the seat arrangement 18 of the stair lift, and at the other end to a circular mass 44. The arm 40 is arranged such that the direction of the axis A lies in the plane of the arm 40. Thus, when the seat arrangement is inclined about the axis A, the mass will move under gravity to bend the arm 40.

As the arm 40 is stiff, the actual angle of deflection of the arm, will be lower than the actual angle of deviation from the horizontal of the seat arrangement and the resonant frequency will be much higher than a pendulum, and can easily be made of the order of 30Hz using a piezo-electric sensor element it has been possible to detect angular changes down to 0.1° or less. However, for small angular deflections θ of the seat arrangement, the strain will be proportional to θ, and hence the voltage V produced by the strain gauge will be proportional to dθ/dt. The precise shape of this mass 44 is not important, but the mass should cover a fairly large area covered in a plane normal to the axis A and it is more convenient if the shape of the mass is symmetrical about a vertical axis. In particular, the axis A will preferably pass through the mass 44.

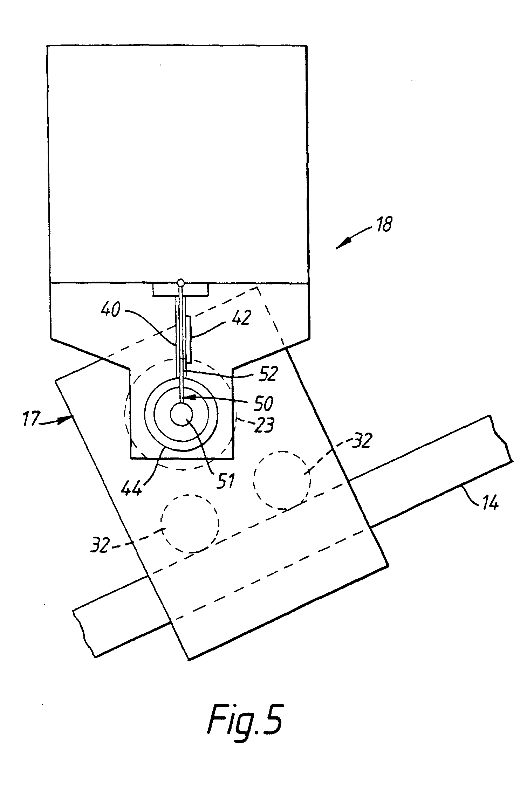

The arm is attached to the seat arrangement such that it hangs vertically from the seat arrangement 18 when the seat arrangement is in a horizontal orientation. The centre of mass of the mass 44 is located substantially at a point located on an extension of the axis A of the pivot 8, when the seat arrangement is in a horizontal orientation. The combination of the arm of material 40, the strain gauge 42, and the mass 44 will hereinafter be referred to as an inclinometer. As is shown in Figure 4, the voltage V generated by the inclinometer is used as a control signal for the motor 38; a clockwise rotation of the inclinometer generates a signal V to the motor to cause equal and opposite rotation of the seat arrangement 18 about the chassis arrangement 17 at a rate proportional to the value of the signal V. As the signal V is proportional to dθ/dt (the absolute rate of rotation of the seat arrangement), and the speed of the motor is proportional to the rate of rotation of the seat arrangement about the chassis means, calibration of the control signal allows the motor 38 to rotate the seat arrangement 18 at dθ/dt relative to the chassis arrangement 3 and hence cancel any absolute rotation of the seat arrangement.

If the stair lift is travelling at one gradient and undergoes a change in gradient, the chassis arrangement will begin to rotate at a rate ω. This value will depend on the radius of curvature and speed of the stair lift at the point in question. The seat arrangement 18, which is rigidly connected to the chassis arrangement 17 will also rotate at rate ω. This will cause a strain in the inclinometer generating an output voltage V from the inclinometer proportional to ω. This signal V controls the motor 38 which will rotate the seat arrangement at the same rate ∼ in the opposite direction relative to the chassis arrangement. As a result, the seat maintains a generally horizontal attitude.

When the seat arrangement undergoes angular acceleration at θ relative to the chassis arrangement, the mass 44 will accelerate at rθ. Inertia of the mass will mean that a significant component proportional to r is added to the strain on the inclinometer during this angular acceleration. This strain on the inclinometer will generate a voltage V_{E} which will be fed to the motor and cause an extra component of the angular acceleration of the seat arrangement which is unwanted. If r is large, this extra component of the signal V can be larger than the desired component due to angular deviation, and in these situations significant undesirable resonance can be set up. The distance r between the centre of mass of mass 44 and the axis of rotation of the seat arrangement 18 and the chassis arrangement 17 is arranged to be substantially zero when the inclinometer is at rest and the seat arrangement is horizontal.

In order to attain as low a value of r as possible, regardless of the rate and direction of the change of gradient, a substantially circular shape for mass 44 is advantageous as its accelerational properties will vary to a similar degree in whichever way it moves from a preferred position. Furthermore an annular shape has also been found to be advantageous.

The output of the dynamic sensor actually comprises 3 components, one is due to the error caused by the seat being off-level, the second through inertia due to the rotational acceleration of the weight, and the third through inertia due to the linear acceleration and deceleration of the stairlift.

In practice, the third component signal due to the linear travel of the lift is small and does not substantially affect the system performance as the rate of change of linear speed is slow.

The value of the second component due to rotational acceleration is minimised by placing the center of mass of the weight at the point of rotation thus reducing the radius of rotation r to a minimum as described above.

The remaining off-level error signal, which is proportional to the strain experienced by the strain gauge 42 is fed to the motor drive and the phase is arranged so that the motor corrects the error until there comes a point at which the seat is level. Thus the control system is a closed loop.

In this embodiment, the sensor is in the form of a piezoelectric strain gauge which generates a signal proportional to strain. The output of the strain gauge is temporarily stored as a charge on a capacitor the charge Q being a function of strain x K x e^{-1/CR}. The charge will eventually be lost as the capacitor discharges through the inevitable resistance component. Thus the dynamic sensor on its own cannot provide long term positional information, typically a few minutes. In some cases, this is not important, but for a stair lift it is necessary to have a long-term levelling reference such that the lift has an absolute reference point to use when initially switched on.

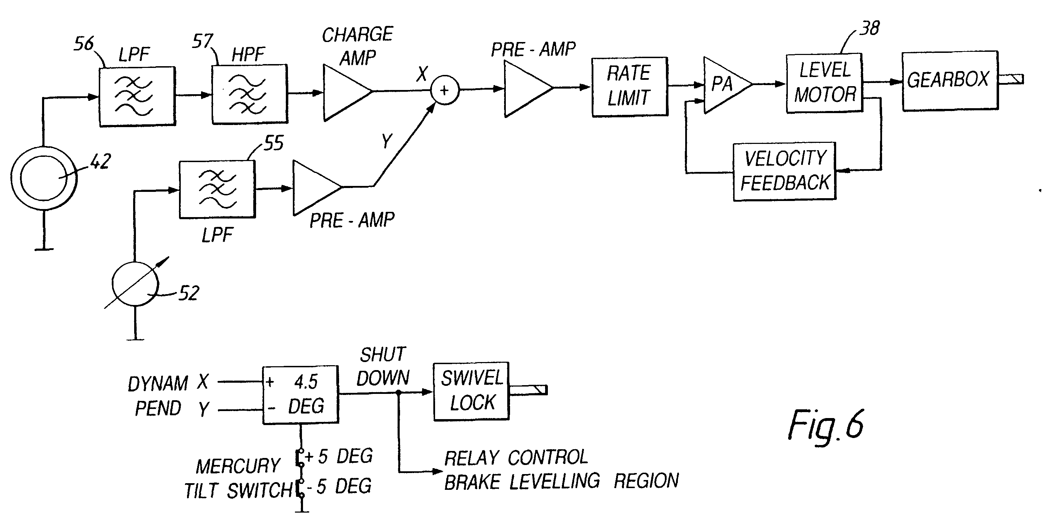

This problem is overcome in a second embodiment of the present invention shown in Figure 5. A circuit diagram for this embodiment is shown in Figure 6. The stair lift of the first embodiment is further provided with a pendulum arrangement 50 as well as the inclinometer. This pendulum arrangement comprises a weight 51 on the end of a rigid arm 52 and can be located at any convenient position. As shown weight is positioned so that its centre of mass lies on the axis A and is provided with a potentiometer 52 or other means for providing a signal Y proportional to the angular deviation of the pendulum arrangement. However as discussed earlier, pendulums in the size ranges allowable on a stair lift have resonant frequencies of the order of a few hertz. These are of the same order of magnitude as the angular accelerations of the stair lift, and so, when the stair lift is in motion, significant sinusoidal unwanted components will be added to the signal Y. However, the signal gives an absolute position signal which is used as the long term levelling reference but is also used for long term correction of errors caused by inaccuracies in the calibration of the inclinometer and small external effects such as draughts. The signal Y is preferably passed through a low pass filter 55 (Fig. 6) and the resultant signal added to the signal X for supply to the tilt motor 38 speed control. The quick response of the inclinometer 42 is then combined with the longer term accuracy of the pendulum 50 so that the seat arrangement travels over a smooth and horizontal path.

It will be noted that the output of the inclinometer 42 is fed through the series combination of a low pass filter 56 and a high pass filter 57. This creates a pass band the volume of which is designed to pass seat error signals but cut off before the natural resonant frequency of the dynamic sensor assembly. In this embodiment, the low pass filter 56 suppresses signals above 15 Hz. Additionally, the high pass filter 57 suppresses signals at low frequency such as those due to drift caused by e.g. temperature change. In this embodiment these frequencies are below 0.15 Hz being of the order of 0.015Hz. This also has the effect of leaving the pendulum 52 to compensate for these low frequency effects.

In modifications of either of the above embodiments, resistive, semi-conductor or light deflection strain gauges are used. Infra red, capacitative and ultra sonic means could be adopted to measure the amount of deflection. It is thus possible that a single sensor could be used to replace the combination of the inclinometer and pendulum.

A further advantage of the inclinometer and pendulum arrangement disclosed above is that different levels of safety interlock can be provided to ensure that in the event of a malfunction, the seat cannot be rotated by more than a predetermined amount from the horizontal. It will be appreciated that the output of the inclinometer can be used to trigger a safety lock in the event that the output from the inclinometer exceeds a preset value. The inclinometer provides a very fast output and consequently is suitable for providing a first level of safety. If this output signal is combined with a further output signal from the pendulum arrangement which is slower acting, the combination of output signals from these two sensors could provide a second level of safety. Finally, by the addition of a static level switch such as a mercury tilt switch could inhibit the operation of the stair lift in the event of a gross fault.

While a stair lift incorporating the sensor or sensors has been described, it will be appreciated that the sensors either separately or in combination can be used in other arrangements where the level of an object has to be controlled, within the scope of the appended claims.

## Claims

1. Apparatus comprising first and second assemblies (17, 18) connecting together for relative movement about an axis of rotation, means (22) for causing relative movement between the assemblies and control means for controlling the movement means, characterised in that the control means includes an inclinometer attached to the first assembly (18), the inclinometer comprising an inertial mass (44) attached to a stiff arm (40) provided with a strain gauge (42), wherein the centre of mass of the inertial mass (44) is substantially located at the axis of rotation (A) of the first assembly relative to the second assembly.

2. Apparatus according to claim 1 and further provided with a pendulum, (50), both the inclinometer and pendulum being arranged to monitor inclination.

3. Apparatus according to claim 2, wherein the inclinometer (40, 42, 44) output is used to control inclination of the first assembly over short periods, and the pendulum (50) is used to correct any accumulated error in the inclination of the first assembly over longer periods.

4. Apparatus according to any preceding claim wherein the inertial mass (44) is substantially circular in shape.

5. Apparatus according to any preceding claim wherein the inertial mass (44) is substantially annular.

6. Apparatus according to claim 1 or 2, wherein the output of the inclinometer and/or the pendulum is used to control the operation of a locking arrangement to prevent relative movement between the first and second assemblies.

7. Apparatus according to any one of the preceding claims and comprising a level responsive switch for controlling the operation of a locking arrangement to prevent relative movement between the first and second assemblies.

8. Apparatus according to claim 7, wherein the switch is a mercury switch.

9. Apparatus according to any one of the preceding claims wherein the first assembly is a chair assembly and the second assembly is a chassis assembly arranged to be carried by a rail to form a lift.

## Patentansprüche

1. Vorrichtung, umfassend eine erste und eine zweite Baugruppe (17, 18), die für eine relative Bewegung um eine Rotationsachse verbünden sind, ein Mittel (22) zum Bewirken der relativen Bewegung zwischen den Baugruppen und ein Steuermittel zum Steuern des Bewegungsmittels, dadurch gekennzeichnet, dass das Steuermittel einen an der ersten Baugruppe (18) angebrachten Neigungsmesser aufweist, wobei der Neigungsmesser eine Inertialmasse (44) umfasst, die an einem mit einem Dehnungsmessstreifen (42) versehenen steifen Arm (40) angebracht ist, wobei sich das Massezentrum der Inertialmasse (44) im Wesentlichen an der Rotationsachse (A) der ersten Baugruppe relativ zur zweiten Baugruppe befindet.

2. Vorrichtung nach Anspruch 1, ferner umfassend ein Pendel (50), wobei der Neigungsmesser und das Pendel die Aufgabe haben, die Neigung zu überwachen.

3. Vorrichtung nach Anspruch 2, bei der der Ausgang des Neigungsmessers (40, 42, 44) zum Steuern der Neigung der ersten Baugruppe über kurze Perioden und das Pendel (50) zum Korrigieren eines akkumulierten Fehlers in der Neigung der ersten Baugruppe über längere Perioden verwendet wird.

4. Vorrichtung nach einem der vorherigen Ansprüche, bei der die Inertialmasse (44) im Wesentlichen kreisfömig ist.

5. Vorrichtung nach einem der vorherigen Ansprüche, bei der die Inertialmasse (44) im Wesentlichen ringfömig ist.

6. Vorrichtung nach Anspruch 1 oder 2, bei der der Ausgang des Neigungsmessers und/oder des Pendels zum Steuern der Betätigung einer Sperranordnung verwendet wird, um eine relative Bewegung zwischen der ersten und der zweiten Baugruppe zu verhindern.

7. Vorrichtung nach einem der vorherigen Ansprüche, umfassend einen auf Höhe ansprechenden Schalter zum Steuern der Betätigung einer Sperranordnung, um eine relative Bewegung zwischen der ersten und der zweiten Baugruppe zu verhindern.

8. Vorrichtung nach Anspruch 7, bei der der Schalter ein. Quecksilberschalter ist.

9. Vorrichtung nach einem der vorherigen Ansprüche, bei der die erste Baugruppe eine Stuhlbaugruppe und die zweite Baugruppe eines Fahrwerkbaugruppe ist, die so gestaltet ist, das sie zur Bildung eines Treppenaufzugs von einer Schiene getragen werden kann.

## Revendications

1. Appareil comportant un premier et un deuxième ensembles (17, 18) qui se connectent mutuellement pour un mouvement relatif autour d'un axe de rotation, des moyens (22) pour causer un mouvement relatif entre les ensembles et des moyens de commande pour commander les moyens de mouvement, caractérisé en ce que les moyens de commande incluent un inclinomètre attaché au premier ensemble (18), l'inclinomètre comportant une masse inerte (44) attachée à un bras rigide (40) muni d'une jauge de contrainte (42), dans lequel le centre massique de la masse inerte (44) est sensiblement situé à l'axe de rotation (A) du premier ensemble relativement au deuxième ensemble.

2. Appareil selon la revendication 1, et pourvu de plus d'un pendule (50), tant l'inclinomètre que le pendule étant agencés pour contrôler l'inclinaison.

3. Appareil selon la revendication 2, dans lequel la sortie de l'inclinomètre (40,42,44) est utilisée pour commander l'inclinaison du premier ensemble pendant de brèves périodes, et le pendule (50) est utilisé pour corriger toute erreur cumulée de l'inclinaison du premier ensemble pendant de plus longues périodes.

4. Appareil selon l'une quelconque des revendications précédentes, dans lequel la masse inerte (44) est de forme sensiblement circulaire.

5. Appareil selon l'une quelconque des revendications précédentes, dans lequel la masse inerte (44) est sensiblement annulaire.

6. Appareil selon la revendication 1 ou 2, dans lequel la sortie de l'inclinomètre et/ou le pendule est (sont) utilisée(s) pour commander le fonctionnement d'un dispositif de blocage pour prévenir tout mouvement relatif entre le premier et le deuxième ensembles.

7. Appareil selon l'une quelconque des revendications précédentes et comportant un interrupteur réagissant à des niveaux pour commander l'opération d'un agencement de blocage pour prévenir tout mouvement relatif entre le premier et le deuxième ensembles.

8. Appareil selon la revendication 7, dans lequel l'interrupteur est un interrupteur au mercure.

9. Appareil selon l'une quelconque des revendications précédentes, dans lequel le premier ensemble est un ensemble à chaise et le deuxième ensemble est un ensemble à châssis agencé pour être porté par un rail pour former un appareil pour monter les escaliers.
